# EUROPEAN PATENT SPECIFICATION

(11) **EP 2 944 529 B1**
(45) Date of publication and mention of the grant of the patent: **25.01.2017**
(21) Application number: 14001699.9
(22) Date of filing: 14.05.2014
(51) Int. Cl.: B60T 17/08

(54) **Spring brake actuator for use in a commercial vehicle, release bolt, and use of such a bolt in said spring brake actuator**
Federspeicherbremszylinder eines Nutzfahrzeugs, Freigaberiegel und Verwendung eines solchen Riegels in diesem Federspeicherbremszylinder
Actionneur de frein à ressort destiné à être utilisé dans un véhicule utilitaire, boulon de débrayage et utilisation d'un tel boulon dans ledit actionneur

(43) Date of publication of application: 18.11.2015
(73) Proprietor: WABCO Europe BVBA, 1160 Brussels (BE)
(72) Inventor: Dobrowolski, Bartosz, 50-518 Wroclaw (PL); Grzeszczuk, Michal, 55-200 Olawa (PL); Szozda, Andrzej, 58-200 Dzierzoniow (PL)
(74) Representative: Lauerwald, Jörg

(56) References cited:
- EP-A1- 0 530 461
- WO-A1-2008/027019
- DE-A1- 1 680 312

## Description

The present invention relates to a spring brake actuator, in particular parking or emergency spring brake actuator, for use in a commercial vehicle, said actuator comprising a cylinder housing having a cylinder housing base, a spring brake piston located in said cylinder housing for applying a braking force, a compression spring located between the cylinder housing base and the spring brake piston, said compression spring being effective to push the spring brake piston away from the base, a brake release bolt, preferably a half-release bolt, having a threaded portion, a running nut engaging the threaded portion, said running nut being adapted to move the spring brake piston against the force of the compression spring, wherein the spring brake piston comprises a flange portion adapted for abutting against the running nut, and a static nut fixedly attached to the bolt, said static nut being effective to move the running nut along the threaded portion.

The document WO2008/027019 A1 describes a spring brake actuator with a stop abutment between its housing and its piston.

When using a half-release bolt which typically comprises a first thread portion, for example a left handed thread, and a second thread portion, for example a right handed thread, the running nut preferably cooperates with the first thread portion, and the static nut cooperates with the second threaded portion.

Spring brake actuators of the aforementioned type are widely used in the commercial vehicle industry, in particular in combination with diaphragm mechanisms, to provide the combined functions of service braking systems and emergency and parking braking systems. In view of the present invention, the function of the compression spring in the cylinder housing is of particular interest. The spring brake actuator - when operated in a so-called release position - holds the compression spring in a compressed state by applying positive pressure in a corresponding pressure chamber.

By venting said corresponding pressure chamber, for example by actuating a hand brake valve, the pressure chamber is vented. When the ensuing drop and pressure reaches the response range of the compression spring, the force of the spring overcomes the residual pressure in the chamber, allowing the spring force to be transmitted to a push-rod and piston of the braking system. This way, the spring force is transferred to the wheel brake.

Normally, after actuation of the compression spring, the release position can be restored by pressurizing the corresponding pressure chamber and moving the spring back into its compressed state. There are, however, situations when this is not desired or possible. Therefore, spring brake actuators of the aforementioned type comprise a mechanical release mechanism consisting of the brake release bolt, a screw cap or static nut fixedly attached to the bolt and a running nut for moving the spring-actuated piston and the spring itself back into the compressed state, wherein movement of the running nut is caused by rotation of the static nut and the brake release bolt.

The further an operator rotates the release bolt, the stronger the compression of the spring, and the further he will move the compression spring towards the release position. The screw resistance grows accordingly and thus the torque the operator has to apply. In practice, while the system generally works satisfactorily, it can occur in certain instances that an operator does not recognize due to the high torque already applied when the compression spring has reached its release position. He may then apply an even higher torque which leads to even further movement of the running nut. Since the compression spring can however not be compressed beyond a state of maximum compression, the continuing application of torque onto the release bolt will lead to potential damage to either the brake release bolt, the running nut and/or the cylinder housing which is ultimately subjected to the forces applied via the compression spring. This problem is increased when using a half release bolt. The piston movement per rotation of the bolt can be several times the movement of a piston which is actuated by a standard release bolt, for example three times. Hence, torque increase is significantly steeper when excessively rotating the half release bolt, leading to more damage with fewer rotations.

Consequently, it has been an object of the invention to provide a spring brake actuator of the aforementioned type which reduces the risk of damage incurred by maloperation.

The invention attains this object by providing a spring brake actuator according to claim 1. In particular, the invention attains this object in an embodiment where the spring brake actuator comprises a protrusion inside the cylinder housing extending away from the cylinder housing base, and a stopper located on the release bolt at a position between the running nut and the static nut, said stopper being adapted to abut against the protrusion at a predetermined stroke position of the spring brake piston. The invention is based upon the finding that in order to improve operating safety, it is beneficial to provide a reliable indication means for the operator that an end stop position has been reached and it shall thus be desisted from further rotating the release bolt. It has been found that a clear haptic feedback is a very reliable way for the operator to recognize the reaching of the end stop. This haptic feedback is provided by abutting the stopper against the release bolt. As soon as the stopper reaches and abuts against the protrusion provided on the inside of the cylinder housing, there is a steep increase in the torque felt by the operator when trying to rotate the release bolt further. Due to the direct abutment of the stopper on the release bolt against the protrusion on the housing, the operator does not apply further compression force to the spring after reaching the end stop, but instead only applies force from the release bolt through the stopper directly to the protrusion, preventing damage to the compression spring and/or the cylinder housing base. Operation safety and risk of maloperation is significantly reduced by this measure.

In a further embodiment of the invention, the stopper and the protrusion are positioned with respect to each other such that they abut against each other when the compression spring has been compressed far enough for the spring brake piston to have reached the zero stroke position. The so-called zero stroke position defines the position in which the compression spring is in the release position and the piston has correspondingly been retracted inside the cylinder housing. Preferably, the end stop is reached on or shortly after the piston has reached the zero stroke position such that the number of revolutions the operator is able to apply to the release bolt beyond what would be necessary is limited. The exact number of revolutions possible after reaching the zero stroke position may differ because of the dimensioning and scope of tolerances of the spring brake actuator. Typically, the number of revolutions possible after reaching said zero stroke position will however be in the single-digit range.

Preferentially, the stopper and protrusion are positioned with respect to each other such that the cylinder housing base and/or the flange portion of the spring brake piston are elastically deformed when the stopper and the protrusion abut against each other. In terms of the present invention, elastic deformation is understood as purely elastic deformation without plastic deformation.

In a preferred embodiment, the threaded portion on the release bolt is a first threaded portion having a first thread orientation, and the release bolt further comprises a second threaded portion having an opposite orientation with respect to the first threaded portion. For example, the first thread orientation may be a left hand thread, whereas the second thread orientation may be a right hand thread.

Preferably, the stopper is located between the first and second threaded portions on the release bolt.

Furthermore, it is preferred that the second threaded portion of the release bolt engages a corresponding threaded portion provided on the cylinder housing base.

In a preferred embodiment of the spring brake actuator, the protrusion is formed as a boss which is fixedly attached in an opening of the cylinder housing base. Preferably, the boss is attached to the cylinder housing base by at least one of the following: welding, soldering, screwing and force fitting. The protrusion preferably comprises a hollow cylindrical portion such as a through-bore, wherein the second threaded portion is located on the inside of said hollow cylindrical portion.

In a preferred embodiment, the stopper is formed as a shoulder on the release bolt. Forming the stopper as a shoulder directly on the release bolt provides a very rigid one-piece design which allows for very high force transmission, leading to a particularly steep increase in torque felt by the operator as haptic feedback. Preferably, the stopper is formed as a shoulder having a conical transition between the first and second threaded portions on the release bolt. The conical shape has the beneficial function of preventing an unintended damaging of the threads both inside the protrusion and on the release bolt.

As an alternative to the one-piece design mentioned herein above, the stopper alternatively is preferably formed as at least one of the following: Seeger ring, spring ring, ring press-fit on the bolt and washer.

These replaceable stopper parts are easily obtainable on the market, and can reliably and quickly be installed on the release bolts, leading to economic manufacture of the latter.

In a further preferred embodiment, the static nut is rotationally fixed with respect to the release bolt by means of a shear pin. The shear pin preferably is designed to break and be destroyed once the operator applies excessive torque to the static nut. Excessive torque is herein defined as a predetermined amount of torque which is well beyond what the operator normally would apply, but still below an amount where damage to the thread of the bolt or protrusion might occur. By implementing such a shear pin, further torque application and screwing will be made impossible because with the destruction of the shear pin, the force transmission between static nut and release bolt is no longer given. A further and particular advantage of this embodiment is that it will immediately be visible from the outside that an excessive amount of force was applied to the release bolt since the shear pin is missing.

According to a further preferred embodiment, the stopper and/or the protrusion comprise a marker adapted to put a mark on the protrusion, or stopper respectively, when the stopper and protrusion are brought into contact with each other. Preferentially, the marker is formed as a sphere on the stopper and/or on the protrusion, and adapted to create a scratch, preferably an imprint, on the respective opposite part. This way, a reliable means for retroactively detecting an excessive application of force to the piston is provided. A further advantage lies in the fact that the mark is being created inside the actuator housing. Thus, the mark is not visible to the operator himself and he can not manipulate the mark in an attempt to conceal any misuse of the release mechanism.

According to a further aspect, the invention also relates to a release bolt, in particular a half release bolt, for use in a spring brake actuator, preferably a spring brake actuator according to one of the previously mentioned preferred embodiments, comprising a first threaded portion having a first thread orientation, the first threaded portion being adapted to engage a corresponding threaded portion of a running nut inside a spring brake cylinder housing, a second threaded portion having an opposite thread orientation with respect to the first thread orientation, the second threaded portion being adapted to engage a corresponding threaded portion provided on a housing cylinder base of the spring brake actuator, a static nut fixedly attached to the release bolt. The invention also attains the initially described object by providing a release bolt of the aforementioned type which comprises a stopper located on the release bolt at a position between the first and second threaded portions, said stopper being adapted to abut against a protrusion provided inside the cylinder housing extending away from the cylinder housing base at a predetermined stroke position of the spring brake piston.

Preferably, the static nut is rotationally fixed to the release bolt by means of a shear pin.

Regarding the particular advantages of the release bolt according to the present invention, it is referred to the above comments regarding the spring brake actuator according to the invention.

Preferable embodiments of the spring brake actuator described herein above are also preferred embodiments of the release bolt according to the present invention.

In a further aspect, the invention also relates to the use of a release bolt for moving a spring brake piston of a spring brake actuator against a compression spring located between a cylinder housing base and the spring brake piston, said compression spring being effective to push the spring brake piston away from the cylinder housing base.

The invention attains the initially described object by suggesting to use a bolt according to one of the preferred embodiments mentioned herein above for said operation.

For a more complete understanding of the invention, the invention will now be described in more detail with reference to the accompanying drawings. The detailed description will illustrate and describe or is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and is claimed hereinafter. Further, the features described in the description, the drawings and the claims disclosing the invention may be essential for the invention considered alone or in combination. In particular, any reference signs in the claims shall not be construed as limiting the scope of the invention. The word "comprising" does not exclude other elements or steps. The wording "a" or "an" does not exclude a plurality.

In brief, the figures to which reference will be made show:
Figure 1 shows a schematic cross-sectional view of a spring brake actuator according to an embodiment of the invention,
Figures 2a,b show different operational states of a release mechanism of the spring brake actuator of figure 1,
Figures 3a,b show different detailed schematic cross-sectional views of the cylinder housing of the spring brake actuator according to figure 1, and
Figures 4a,b show details in different schematic side views of a release bolt to an embodiment of the invention, in particular a release bolt of the spring brake actuator of figure 1.

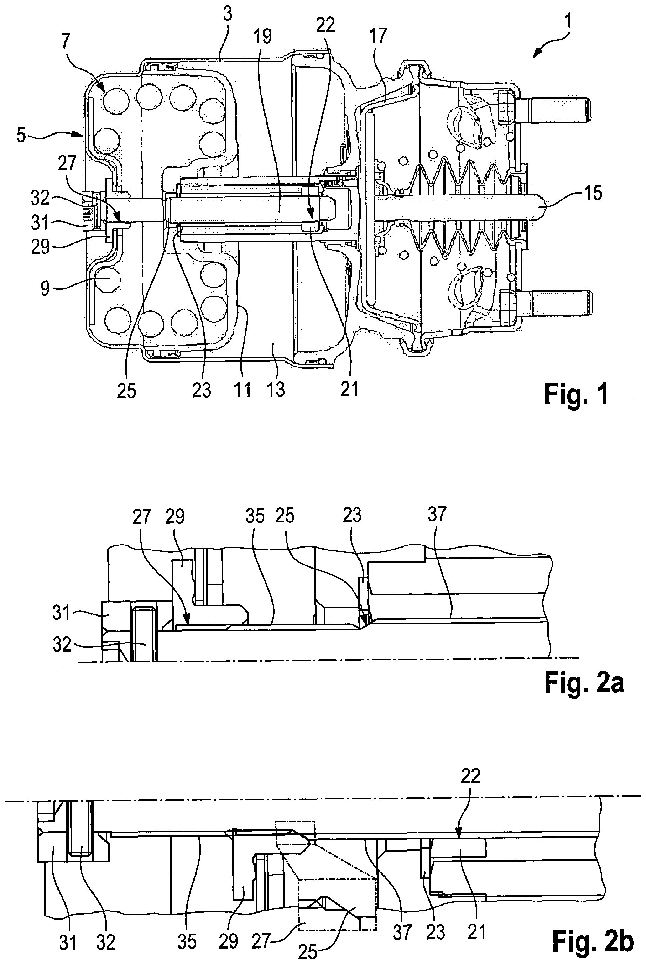

Figure 1 shows a cross-sectional schematic view of a spring brake actuator 1 according to the principles of the present invention. The spring brake actuator 1 comprises a cylinder housing 3. Inside the cylinder housing 3, a spring-loaded portion 7 and a pressure chamber 13 are located. The spring loaded portion 7 comprises a compression spring 9 which rests on the left side in figure 1 against a cylinder housing base 5 and on the opposing side on a spring brake piston 11 which is in figure 1 held in the release position by positive pressure inside the pressure chamber 13.

The spring brake piston 11 is adapted to act upon a diaphragm 17 of the spring brake actuator 1, which transmits the inflicted force to a push road 15 which in turn transmits the applied power to the wheel brakes.

The spring brake actuator 1 further comprises a mechanical release mechanism. The release mechanism comprises a release bolt 19. A running nut 21 is screwed onto the release bolt 19 and adapted to move along the release bolt 19 upon rotational movement of the release bolt 19. The running nut 21 is adapted to move rotation-free inside a cavity of the spring brake piston 11 until it reaches a flange portion 23 beyond which no further movement of the running nut 21 is possible.

The release bolt comprises a static nut 31 which is fixedly attached thereto by means of a share pin 32. The release bolt 19 is screwed into the cylinder housing 3 by means of a boss 29. The boss 29 has a protrusion 27 which carries an internal thread having an inner cylindrical portion. The release bolt 19 comprises a stopper 25 which is adapted to be brought into abutment with the protrusion 27.

Figures 2a,b show two different states of movement for the release mechanism. In particular, figure 2a shows the release bolt in a state when the stopper 25 is out of contact with the protrusion 27 of the boss 29.

In contrast, figure 2b shows the release bolt in a second state. In this state, the static nut 31 has been rotated sufficiently such that the release bolt 19 has advanced towards the left hand side (of figures 2a,b). The stopper 25 on the release bolt 19 is abutting against the protrusion 27 of the boss 29. The running nut 21 has reached the flange portion 23 by running along a first threaded portion which has a first thread orientation. A second thread portion 35 on the release bolt 19 preferably has an opposite thread orientation. In the state shown in figure 2b, further application of torque onto the static nut 31 would be taken up by the protrusion 27 to a significant part at least. This way, further movement of the running nut towards the flange portion 23 is prevented, also preventing damage to the flange portion 23 and/or the release bolt 19, or running nut 21, respectively. Due to the rigidity of the boss 29, the increase in torque rotating the static nut is immediately felt by the operator.

If the torque applied by the operator is nonetheless increased even more on the static nut 31, the share pin 32 will break, providing another clear indicator that too much torque was applied by the operator and also preventing further damage to the internal parts of the release mechanism and the spring brake actuator 1.

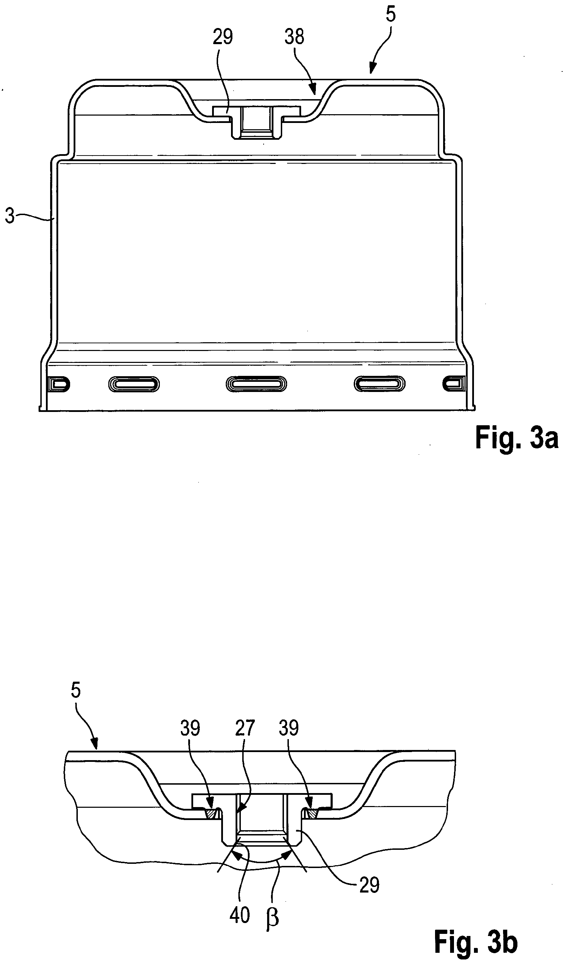

Figure 3a shows a schematic cross-sectional view of the cylinder housing 3. The cylinder housing base 5 comprises a recess 38. In recess 38, the boss 29 has been implemented. The fastening of the boss 29 with respect to the cylinder housing 3 is exemplarily shown in figure 3b. The boss 29 is fixed in attachment portions 39 to the cylinder housing base 5 for example by means of welding.

As can further be seen from figure 3b, the boss 29 comprises at the periphery of the protrusion 27 a chamfer 40 with an angle β.

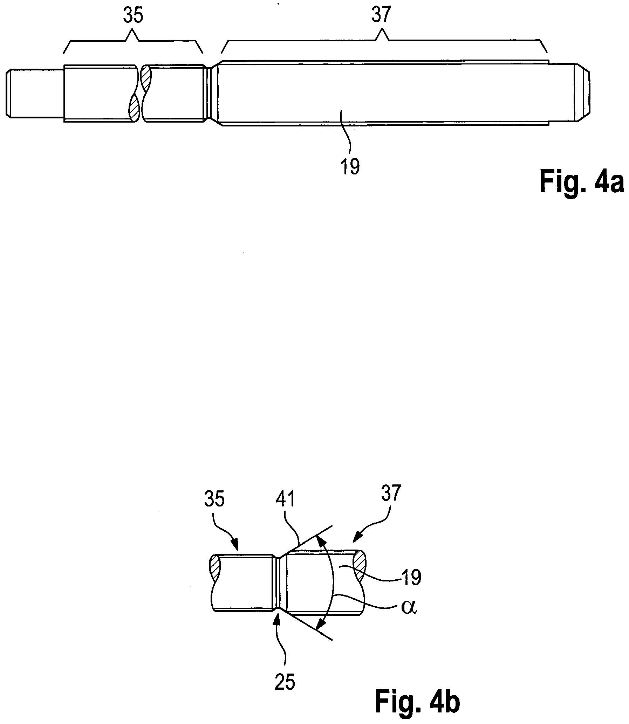

Figures 4a,b show the release bolt 19 in more detail. The release bolt 19 in the shown embodiment comprises a stopper 25 in the shape of a shoulder 41, which is conically shaped with an angle α. It is particularly preferred if angles α and β are identical.

The stopper 25 is located in-between the first threaded portion 37 and the second threaded portion 35 of release bolt 19.

### List of references (Part of the description):

- 1: spring brake actuator
- 3: cylinder housing
- 5: cylinder housing base
- 7: spring-loaded portion
- 9: compression spring
- 11: spring brake piston
- 13: pressure chamber
- 15: push road
- 17: diaphragm
- 19: release bolt
- 21: running nut
- 22: thread of running nut 21
- 23: flange portion
- 25: stopper
- 27: protrusion
- 29: boss
- 31: static nut
- 32: share pin
- 35: second threaded portion
- 37: first threaded portion
- 38: recession
- 39: fastening portion
- 40: chamfer
- 41: shoulder,
- α, β: angle

## Claims

1. Spring brake actuator (1), in particular parking or emergency spring brake actuator, for use in a commercial vehicle, said actuator comprising
- a cylinder housing (3) having a cylinder housing base,
- a spring brake piston (11) located in said cylinder housing for applying a braking force,
- a compression spring (9) located between the cylinder housing base and the spring brake piston, said compression spring being effective to push the spring brake piston away from the base,
- a brake release bolt (19), preferably a half-release bolt, having a threaded portion (37),
- a running nut (21) engaging the threaded portion (37), said running nut being adapted to move the spring brake piston against the force of the compression spring, wherein the spring brake piston comprises a flange portion (23) adapted for abutting against the running nut, and
- a static nut (31) fixedly attached to the bolt, said static nut being effective to move the running nut along the threaded portion,
**characterized by** a protrusion (27) inside the cylinder housing extending away from the cylinder housing base, and
a stopper (25) located on the release bolt at a position between the running nut and the static nut, said stopper being adapted to abut against the protrusion (27) at a predetermined stroke position of the spring brake piston (11).

2. Spring brake actuator (1) according to claim 1,
wherein the stopper (25) and the protrusion (27) are positioned with respect to each other such that they abut against each other when the compression spring (9) has been compressed far enough for the spring brake piston (11) to have reached the zero stroke position.

3. Spring brake actuator (1) according to claim 1 or 2,
wherein the stopper (25) and protrusion (27) are positioned with respect to each other such that the cylinder housing base (5) and/or the flange portion (23) of the spring brake piston (11) are elastically deformed when the stopper (25) and the protrusion (27) abut against each other.

4. Spring brake actuator (1) according to one of the preceding claims,
wherein the threaded portion (37) on the release bolt (19) is a first threaded portion having a first thread orientation, and the release bolt (19) further comprises a second threaded portion (35) having an opposite orientation with respect to the first threaded portion.

5. Spring brake actuator (1) according to claim 4,
wherein the stopper (25) is located between the first and second threaded portions (37, 35) on the release bolt (19).

6. Spring brake actuator (1) according to claim 5,
wherein the second threaded portion (35) of the release bolt (19) engages a corresponding threaded portion provided on the cylinder housing base (5).

7. Spring brake actuator (1) according to one of the preceding claims,
wherein the protrusion (27) is formed as a boss (29) which is fixedly attached in an opening of the cylinder housing base (5).

8. Spring brake actuator (1) according to claim 7,
wherein the boss (29) is attached to the cylinder housing base (5) by at least one of the following:
- welding,
- soldering,
- screwing, and
- force fitting.

9. Spring brake actuator (1) according to one of the preceding claims, wherein the stopper (25) is formed as a shoulder (41) on the release bolt (19).

10. Spring brake actuator (1) according to claim 9,
wherein the stopper (25) is formed as a shoulder having a conical transition between the first and second threaded portions (37, 35) on the release bolt.

11. Spring brake actuator (1) according to one of claims 1 to 8,
wherein the stopper (25) is formed as at least one of the following:
- Seeger ring,
- spring ring,
- ring press-fit on the bolt, and
- washer.

12. Spring brake actuator (1) according to one of the preceding claims, wherein the static nut (31) is rotationally fixed with respect to the release bolt (19) by means of a shear pin (32).

13. Release bolt (19), in particular half release bolt, for use in a spring brake actuator (1) according to one of the preceding claims,
comprising
- a first threaded portion (37) having a first thread orientation, the first threaded portion (37) being adapted to engage a corresponding threaded portion of a running nut (21) inside a spring brake cylinder housing (3),
- a second threaded portion (37) having an opposite thread orientation with respect to the first thread orientation, the second threaded portion (35) being adapted to engage a corresponding threaded portion provided on a cylinder housing base (5) of the spring brake actuator (1),
- a static nut (31) fixedly attached to the release bolt (19),
**characterized by** a stopper (25) located on the release bolt (19) at a position between the first and second threaded portions (37, 35), said stopper (25) being adapted to abut against a protrusion (27) provided inside the cylinder housing (3) extending away from the cylinder housing base (5) at a predetermined stroke position of the spring brake piston (11).

14. Use of a bolt (19) according to claim 13 for moving a spring brake piston (11) of a spring brake actuator (1) against a compression spring (9) located between a cylinder housing base (5) and the spring brake piston (11), said compression spring (9) being effective to push the spring brake piston (11) away from the cylinder housing base (5).

## Patentansprüche

1. Federspeicherbremsaktuator (1), insbesondere Federspeicher-Parkbremsaktuator oder Federspeicher-Notbremsaktuator, zur Verwendung in einem Nutzfahrzeug, wobei der Aktuator Folgendes umfasst:
- ein Zylindergehäuse (3) mit einem Zylindergehäuseboden,
- einen in dem Zylindergehäuse befindlichen Federspeicherbremskolben (11) zum Anlegen einer Bremskraft,
- eine zwischen dem Zylindergehäuseboden und dem Federspeicherbremskolben befindliche Druckfeder (9), wobei die Druckfeder so wirkt, dass sie den Federspeicherbremskolben von dem Boden wegdrückt,
- eine Bremsenlöseschraube (19), vorzugsweise eine halbe Löseschraube, mit einem Gewindeabschnitt (37),
- eine Laufmutter (21), die mit dem Gewindeabschnitt (37) in Eingriff befindlich ist, wobei die Laufmutter so ausgelegt ist, dass sie den Federspeicherbremskolben gegen die Kraft der Druckfeder bewegt, wobei der Federspeicherbremskolben einen Bundabschnitt (23) umfasst, der zum Anliegen an der Laufmutter ausgelegt ist, und
- eine fest an der Schraube angebrachte feststehende Mutter (31), wobei die festehende Mutter so wirkt, dass sie die Laufmutter den Gewindeabschnitt entlang bewegt,
**gekennzeichnet durch** einen Vorsprung (27) in dem Zylindergehäuse, der sich vom Zylindergehäuseboden weg erstreckt, und
ein Begrenzungselement (25), das sich an der Löseschraube an einer Position zwischen der Laufmutter und der feststehenden Mutter befindet, wobei das Begrenzungselement so ausgelegt ist, dass es in einer vorbestimmten Hubstellung des Federspeicherbremskolbens (11) an dem Vorsprung (27) anliegt.

2. Federspeicherbremsaktuator (1) nach Anspruch 1,
wobei das Begrenzungselement (25) und der Vorsprung (27) bezogen aufeinander so platziert sind, dass sie aneinander anliegen, wenn die Druckfeder (9) weit genug zusammengedrückt wurde, dass der Federspeicherbremskolben (11) die Nullhubstellung erreicht.

3. Federspeicherbremsaktuator (1) nach Anspruch 1 oder 2,
wobei das Begrenzungselement (25) und der Vorsprung (27) bezogen aufeinander so platziert sind, dass der Zylindergehäuseboden (5) und/oder der Bundabschnitt (23) des Federspeicherbremskolbens (11) elastisch verformt werden, wenn das Begrenzungselement (25) und der Vorsprung (27) aneinander anliegen.

4. Federspeicherbremsaktuator (1) nach einem der vorhergehenden Ansprüche,
wobei der Gewindeabschnitt (37) an der Löseschraube (19) ein erster Gewindeabschnitt mit einer ersten Gewindeausrichtung ist und die Löseschraube (19) ferner einen zweiten Gewindeabschnitt (35) mit einer entgegengesetzten Ausrichtung bezogen auf den ersten Gewindeabschnitt umfasst.

5. Federspeicherbremsaktuator (1) nach Anspruch 4,
wobei das Begrenzungselement (25) zwischen dem ersten und zweiten Gewindeabschnitt (37, 35) an der Löseschraube (19) befindlich ist.

6. Federspeicherbremsaktuator (1) nach Anspruch 5,
wobei der zweite Gewindeabschnitt (35) der Löseschraube (19) mit einem entsprechenden Gewindeabschnitt in Eingriff befindlich ist, der an dem Zylindergehäuseboden (5) vorgesehen ist.

7. Federspeicherbremsaktuator (1) nach einem der vorhergehenden Ansprüche,
wobei der Vorsprung (27) als ein Ansatz (29) ausgebildet ist, der fest in einer Öffnung des Zylindergehäusebodens (5) angebracht ist.

8. Federspeicherbremsaktuator (1) nach Anspruch 7,
wobei der Ansatz (29) über mindestens eins der Folgenden an dem Zylindergehäuseboden (5) angebracht ist:
- Schweißen,
- Löten,
- Anschrauben, und
- Kraftschluss.

9. Federspeicherbremsaktuator (1) nach einem der vorhergehenden Ansprüche,
wobei das Begrenzungselement (25) als eine Schulter (41) an der Löseschraube (19) ausgebildet ist.

10. Federspeicherbremsaktuator (1) nach Anspruch 9, wobei das Begrenzungselement (25) als eine Schulter mit einem konischen Übergang zwischen dem ersten und zweiten Gewindeabschnitt (37, 35) an der Löseschraube ausgebildet ist.

11. Federspeicherbremsaktuator (1) nach einem der Ansprüche 1 bis 8,
wobei das Begrenzungselement (25) als mindestens eins der Folgenden ausgebildet ist:
- Seeger-Ring,
- Federring,
- auf die Schraube aufgepresster Ring, und
- Unterlegscheibe.

12. Federspeicherbremsaktuator (1) nach einem der vorhergehenden Ansprüche,
wobei die feststehende Mutter (31) bezogen auf die Löseschraube (19) mittels eines Scherstifts (32) drehfest ist.

13. Löseschraube (19), insbesondere halbe Löseschraube, zur Verwendung in einem Federspeicherbremsaktuator (1) nach einem der vorhergehenden Ansprüche,
umfassend:
- einen ersten Gewindeabschnitt (37) mit einer ersten Gewindeausrichtung, wobei der erste Gewindeabschnitt (37) zum Eingriff mit einem entsprechenden Gewindeabschnitt einer Laufmutter (21) in einem Federspeicherbremsaktuatorgehäuse (3) ausgelegt ist,
- einen zweiten Gewindeabschnitt (37) mit einer entgegengesetzten Gewindeausrichtung bezogen auf den ersten Gewindeabschnitt, wobei der zweite Gewindeabschnitt (35) zum Eingriff mit einem entsprechenden Gewindeabschnitt an einem Zylindergehäuseboden (5) des Federspeicherbremsaktuators (1) ausgelegt ist,
- eine fest an der Löseschraube (19) angebrachte feststehende Mutter (31),
**gekennzeichnet durch** ein Begrenzungselement (25), das sich an der Löseschraube (19) an einer Position zwischen dem ersten und zweiten Gewindeabschnitt (37, 35) befindet, wobei das Begrenzungselement (25) so ausgelegt ist, dass es in einer vorbestimmten Hubstellung des Federspeicherbremskolbens (11) an einem Vorsprung (27) anliegt, der im Zylindergehäuse (3) so vorgesehen ist, dass er sich vom Zylindergehäuseboden (5) weg erstreckt.

14. Verwendung einer Schraube (19) nach Anspruch 13 zum Bewegen eines Federspeicherbremskolbens (11) eines Federspeicherbremsaktuators (1) gegen eine zwischen einem Zylindergehäuseboden (5) und dem Federspeicherbremskolben (11) befindliche Druckfeder (9), wobei die Druckfeder (9) so wirkt, dass sie den Federspeicherbremskolben (11) von dem Zylindergehäuseboden (5) wegdrückt.

## Revendications

1. Actionneur de frein à ressort (1), en particulier actionneur de frein à ressort d'urgence ou de stationnement, pour l'utilisation dans un véhicule commercial, ledit actionneur comprenant
- un boîtier de cylindre (3) ayant une base de boîtier de cylindre,
- un piston de frein à ressort (11) situé dans ledit boîtier de cylindre pour appliquer une force de freinage,
- un ressort de compression (9) situé entre la base de boîtier de cylindre et le piston de frein à ressort, ledit ressort de compression servant à pousser le piston de frein à ressort à l'écart de la base,
- un boulon de libération de frein (19), de préférence un boulon de demi-libération, ayant une partie filetée (37),
- un écrou roulant (21) s'engageant avec la partie filetée (37), ledit écrou roulant étant prévu pour déplacer le piston de frein à ressort à l'encontre de la force du ressort de compression, le piston de frein à ressort comprenant une partie de bride (23) prévue pour buter contre l'écrou roulant, et
- un écrou statique (31) attaché fixement au boulon, ledit écrou statique servant à déplacer l'écrou roulant le long de la partie filetée, **caractérisé par** une saillie (27) à l'intérieur du boîtier de cylindre s'étendant à l'écart de la base de boîtier de cylindre, et
une butée (25) située sur le boulon de libération dans une position entre l'écrou roulant et l'écrou statique, ladite butée étant prévue pour buter contre la saillie (27) dans une position de course prédéterminée du piston de frein à ressort (11).

2. Actionneur de frein à ressort (1) selon la revendication 1, dans lequel la butée (25) et la saillie (27) sont positionnées l'une par rapport à l'autre de manière à buter l'une contre l'autre lorsque le ressort de compression (9) a été comprimé suffisamment pour que le piston de frein à ressort (11) atteigne la position de course nulle.

3. Actionneur de frein à ressort (1) selon la revendication 1 ou 2,
dans lequel la butée (25) et la saillie (27) sont positionnées l'une par rapport à l'autre de telle sorte que la base de boîtier de cylindre (5) et/ou la partie de bride (23) du piston de frein à ressort (11) soient déformées élastiquement lorsque la butée (25) et la saillie (27) butent l'une contre l'autre.

4. Actionneur de frein à ressort (1) selon l'une quelconque des revendications précédentes,
dans lequel la partie filetée (37) sur le boulon de libération (19) est une première partie filetée ayant une première orientation de filetage et le boulon de libération (19) comprend en outre une deuxième partie filetée (35) ayant une orientation opposée par rapport à la première partie filetée.

5. Actionneur de frein à ressort (1) selon la revendication 4,
dans lequel la butée (25) est située entre la première et la deuxième partie filetée (37, 35) sur le boulon de libération (19).

6. Actionneur de frein à ressort (1) selon la revendication 5,
dans lequel la deuxième partie filetée (35) du boulon de libération (19) s'engage avec une partie filetée correspondante prévue sur la base de boîtier de cylindre (5).

7. Actionneur de frein à ressort (1) selon l'une quelconque des revendications précédentes,
dans lequel la saillie (27) est formée sous la forme d'un bossage (29) qui est attaché fixement dans une ouverture de la base de boîtier de cylindre (5).

8. Actionneur de frein à ressort (1) selon la revendication 7,
dans lequel le bossage (29) est attaché la base de boîtier de cylindre (5) par au moins l'un des moyens suivants :
- soudage,
- brasage,
- vissage, et
- ajustement par force.

9. Actionneur de frein à ressort (1) selon l'une quelconque des revendications précédentes,
dans lequel la butée (25) est formée sous la forme d'un épaulement (41) sur le boulon de libération (19).

10. Actionneur de frein à ressort (1) selon la revendication 9,
dans lequel la butée (25) est formée sous la forme d'un épaulement ayant une transition conique entre la première et la deuxième partie filetée (37, 35) sur le boulon de libération.

11. Actionneur de frein à ressort (1) selon l'une quelconque des revendications 1 à 8,
dans lequel la butée (25) est formée sous la forme d'au moins l'un des éléments suivants :
- anneau de type Seeger,
- bague élastique,
- ajustement par pressage de bague sur le boulon, et
- rondelle.

12. Actionneur de frein à ressort (1) selon l'une quelconque des revendications précédentes,
dans lequel l'écrou statique (31) est fixé à rotation par rapport au boulon de libération (19) au moyen d'une goupille de cisaillement (32).

13. Boulon de libération (19), en particulier boulon de demi-libération pour l'utilisation dans un actionneur de frein à ressort (1) selon l'une quelconque des revendications précédentes, comprenant
- une première partie filetée (37) ayant une première orientation de filetage, la première partie filetée (37) étant prévue pour s'engager avec une partie filetée correspondante d'un écrou roulant (21) à l'intérieur d'un boîtier de cylindre de frein à ressort (3),
- une deuxième partie filetée (37) ayant une orientation de filetage opposée par rapport à la première orientation de filetage, la deuxième partie filetée (35) étant prévue pour s'engager avec une partie filetée correspondante prévue sur une base de boîtier de cylindre (5) de l'actionneur de frein à ressort (1),
- un écrou statique (31) attaché fixement au boulon de libération (19),
**caractérisé par** une butée (25) située sur le boulon de libération (19) dans une position entre la première et la deuxième partie filetée (37, 35), ladite butée (25) étant prévue pour buter contre une saillie (27) prévue à l'intérieur du boîtier de cylindre (3) s'étendant à l'écart de la base de boîtier de cylindre (5) dans une position de course prédéterminée du piston de frein à ressort (11).

14. Utilisation d'un boulon (19) selon la revendication 13 pour déplacer un piston de frein à ressort (11) d'un actionneur de frein à ressort (1) à l'encontre d'un ressort de compression (9) situé entre une base de boîtier de cylindre (5) et le piston de frein à ressort (11), ledit ressort de compression (9) servant à pousser le piston de frein à ressort (11) à l'écart de la base de boîtier de cylindre (5).
